# EUROPÄISCHE PATENTANMELDUNG

(11) **EP 1 741 603 A1**
(43) Veröffentlichungstag der Anmeldung: **10.01.2007**
(21) Anmeldenummer: 06120637.1
(22) Anmeldetag: 31.05.2001
(51) Int. Cl.: B60R 21/13, B62D 33/06

(54) **Überrollschutzvorrichtung für ein Arbeitsfahrzeug**

(30) Priorität: 08.06.2000 US 590644
(62) Teilanmeldung aus: 01113240.4
(71) Anmelder: Deere & Company, Moline, IL 61265-8098 (US)
(72) Erfinder: Sorensen, Richard Carl, Dubuque, IA 52003 (US); Weiler, Kenneth Michael, Bettendorf, IA 52722 (US)
(74) Vertreter: Bradl, Joachim

(57) **Zusammenfassung**

Es wird eine Überrollschutzvorrichtung vorgeschlagen mit einem linken und einem rechten vorderen vertikalen Pfosten (52, 54) sowie einem linken und einem rechten hinteren vertikalen Pfosten (56, 58). Die hinteren vertikalen Pfosten (56, 58) weisen je einen unteren Bereich (70, 72) auf, der sich aufwärts, vorwärts sowie seitlich nach außen vom Boden (68) des Führerhauses erstreckt. Sowohl der linke als auch der rechte vordere vertikale Pfosten (52, 54) besitzen einen pfeilspitzenförmigen Querschnitt. Der pfeilspitzenförmige Querschnitt weist einen Hauptflügel (86), einen Sekundärflügel (88) sowie einen Verbindungsbereich (90) zwischen beiden Flügeln (86, 88) auf. Der pfeilspitzenförmige Querschnitt definiert einen Kanal (92) für eine Windschutzscheibe (44) zur Aufnahme der Kante der Windschutzscheibe (44) und einen Kanal (94) für eine Seitentür (42) zur Aufnahme der Kante der Seitentür (42). Die Pfeilform besitzt eine verlängerte Achse, die koaxial zur Sichtlinie des Bedieners beim Fahren des Fahrzeuges verläuft.

## Beschreibung

Die vorliegende Erfindung betrifft eine Überrollschutzvorrichtung für ein Arbeitsfahrzeug mit einem Boden, mindestens einem linken sowie einem rechten vorderen vertikalen Pfosten, die am Boden des Arbeitsfahrzeuges angebracht sind, sowie einem linken und einem rechten hinteren vertikalen Pfosten, die ebenfalls am Boden des Arbeitsfahrzeuges angebracht sind.

Aus der US 5,820,199 ist eine gattungsbildende Fahrzeugkabine bekannt, welche sich mit einer Kabinenstruktur mit einer erhöhten Festigkeit beschäftigt. Die US 4,605,259 offenbart eine Fahrzeugkabine, welche sich mit verbesserten Sichtverhältnissen beschäftigt.

Der Bedienungsstand der meisten Arbeitsfahrzeuge ist mit einer Überrollschutzvorrichtung versehen. Üblicherweise ist die Überrollschutzvorrichtung am Boden des Bedienungsstands befestigt und umfasst zwei oder vier hiervon vertikal ausgehende Pfosten, die untereinander durch längs- und querverlaufende Teile gekoppelt sind. Um eine ausreichende Festigkeit zum Schutz des Bedieners in einem großen Arbeitsfahrzeug zu schaffen, weisen die vertikalen Pfosten einen großen Querschnitt auf, was wiederum die Sicht des Bedieners zur Arbeitsausrüstung stört. Dieses trifft insbesondere für Tieflöffelbagger zu. Ein Bediener eines Tieflöffelbaggers fährt und bedient gewöhnlich die Ladevorrichtung, während er nach vorn schaut. Für die Bedienung der Tieflöffelbaggereinrichtung dreht der Bediener seinen Sitz um 180 Grad und schaut rückwärts. Daher ist es für den Bediener wichtig, gute Sichtbedingungen nach vorn während des Fahrens und Ladens und nach hinten während des Baggerns zu haben.

Aus der US 4,772,065 ist eine Überrollschutzvorrichtung bekannt. Die Überrollschutzvorrichtung besteht aus mehreren, teilweise nach außen hin gewölbt verlaufenden, im wesentlichen vertikalen Pfosten, mit einem linken und einem rechten vorderen Pfosten, einem linken und einem rechten hinteren Pfosten sowie zwei seitlichen Mittelpfosten. Im Dachbereich verlaufen verbindende Längs- und Querstreben, um insgesamt eine ausreichende Stabilität der Überrollschutzvorrichtung zu erzielen. Die Pfosten besitzen hier einen aus Einzelrechtecken zusammengesetzten Querschnitt, welcher insgesamt eine Art T-Form, L-Form oder Z-Form ergibt. Durch die im Querschnitt gebildeten Innenkanten werden Kanäle zur Aufnahme der Kante einer Scheibe oder der Kante einer Tür oder dergleichen definiert. Auch diese Pfosten ermöglichen durch ihre Anordnung und Querschnittsform nicht eine optimale Sicht für den Bediener.

Es ist die Aufgabe der vorliegenden Erfindung eine Überrollschutzvorrichtung zu schaffen, die eine verbesserte Rundumsicht für die Bedienungsperson ermöglicht.

Die Aufgabe wird durch die Merkmale des unabhängigen Anspruchs 1 gelöst. Die jeweils nachfolgenden abhängigen Ansprüche geben vorteilhafte Weiterbildungen der Erfindung wieder.

Die Aufgabe wird insbesondere durch eine Überrollschutzvorrichtung für ein Arbeitsfahrzeug mit einem Boden, mindestens einem linken sowie einem rechten vorderen vertikalen Pfosten, die am Boden des Arbeitsfahrzeuges angebracht sind, sowie einem linken und einem rechten hinteren vertikalen Pfosten, die ebenfalls am Boden des Arbeitsfahrzeuges angebracht sind, insbesondere hinsichtlich einer Verbesserung der Sicht beim Fahren und/oder Laden dadurch gelöst, dass der linke und rechte vertikale Pfosten einen pfeilförmigen Querschnitt aufweist mit einem Hauptflügel, einem Sekundärflügel und einem dazwischenliegenden Verbindungsabschnitt. Hierdurch wird die Sicht des Bedieners wegen des insoweit im Sichtbereich schmal ausgebildeten Pfostens verbessert.

Auf diese Weise wird die Sicht beim Baggern, insbesondere die Seitensicht des Bedieners beim Bedienen der Baggereinrichtung, vergrößert und somit verbessert.

Arbeitsfahrzeug im Sinne dieser Erfindung umfassen Rad und/oder Raupen angetriebene Fahrzeuge, wobei bei Raupenfahrzeugen die Gleisbahn aus Stahlglieder oder Gummi bestehen kann.

Vorteilhaft ist, wenn sowohl der linke als auch der rechte vordere vertikale Pfosten einen pfeilförmigen Querschnitt aufweist. Der pfeilförmige Querschnitt umfasst einen Hauptflügel, einen Sekundärflügel sowie einen Verbindungsabschnitt, der zwischen den beiden Flügeln platziert ist. Der pfeilförmige Querschnitt kann vorzugsweise einen Kanal für eine Windschutzscheibe zur Aufnahme der Seitenkante der Windschutzscheibe und einen Kanal für eine seitliche Tür zur Aufnahme der Kante der seitlichen Tür definieren. Die Pfeilform besitzt eine verlängerte Achse, die vorzugsweise in Richtung einer Sichtlinie des Bedieners beim Fahren des Tieflöffelbaggers angeordnet ist.

Bei einer weiteren bevorzugten erfindungsgemäßen Ausführungsform der Überrollschutzvorrichtung bilden der Hauptflügel, der Sekundärflügel und der Verbindungsabschnitt einen Kanal für eine Windschutzscheibe und/oder einen Kanal für eine Seitentür, wobei zwischen den Kanälen eine verlängerte Achse verläuft.

Erfindungsgemäß vorteilhaft ist, wenn der pfeilkopfförmige Querschnitt eine verlängerte Achse definiert, die durch den Hauptflügel, den Verbindungsabschnitt und den Sekundärflügel verläuft.

In einer weiteren erfindungsgemäß geeigneten Ausführungsform definiert die Überrollschutzvorrichtung einen abgeschlossenen Innenraum, in welchem ein Bediener Platz nimmt, wobei sich die verlängerten Achsen der linken und rechten vertikalen Pfosten im abgeschlossenen Innenraum schneiden.

Erfindungsgemäß ist vorgesehen, dass der Kanal der Windschutzscheibe eine Kante der vorderen Windschutzscheibe aufnimmt und der Kanal für die Seitentür eine Kante der seitlichen Tür aufnimmt.

Außerdem kann erfindungsgemäß vorgesehen sein, dass sowohl der linke als auch der rechte vordere vertikale Pfosten mit einem äußeren Griff versehen sind, der außerhalb des abgeschlossenen Innenraums angeordnet und in Richtung der verlängerten Achse ausgerichtet ist.

Vorteilhaft ist, wenn der linke als auch der rechte vordere vertikale Pfosten mit einem inneren Griff ausgestattet ist, der innerhalb des abgeschlossenen Innenraums angeordnet und in Richtung der verlängerten Achsen ausgerichtet ist.

In noch einer weiteren erfindungsgemäßen Ausführungsform umfasst die Überrollschutzvorrichtung weiterhin ein vorderes seitlich verlaufendes Teil, das sich zwischen dem linken und dem rechten vertikalen Pfosten erstreckt, wobei sich ein hinteres seitlich verlaufendes Teil zwischen dem linken und dem rechten hinteren vertikalen Pfosten erstreckt, ein linkes längs verlaufendes Teil sich zwischen dem linken vorderen vertikalen Pfosten und dem linken hinteren vertikalen Pfosten erstreckt, und ein rechtes längs verlaufendes Teil sich zwischen dem rechten vorderen vertikalen Pfosten und dem rechten hinteren vertikalen Pfosten erstreckt.

Gemäß einer bevorzugten Ausführungsform weist der linke und der rechte vertikale Pfosten je einen unteren Bereich auf, der sich jeweils vom Boden des Arbeitsfahrzeuges, an dem der linke und rechte vertikale Pfosten befestigt ist, aufwärts, vorwärts und seitlich nach außen erstreckt.

In einer besonders bevorzugten Ausführungsform der Erfindung ist eine aus vier Pfosten bestehende Überrollschutzvorrichtung vorgesehen mit einem linken und einem rechten vorderen vertikalen Pfosten und einem linken und einem rechten hinteren vertikalen Pfosten. Der hintere vertikale Pfosten weist einen unteren Bereich auf, der sich aufwärts, vorwärts und nach außen vom Boden des Bedienungsstandes aus erstreckt. Auf diese Weise wird die Seitensicht des Bedieners während Baggerarbeiten verbessert. Zusätzlich wird dadurch auch noch die Fuß- und Kniefreiheit für den Bediener bei Drehen seines Sitzes vergrößert.

In einer bevorzugten erfindungsgemäßen Ausführungsform der Überrollschutzvorrichtung für ein Fahrzeug mit einem Boden kann der linke und der rechte hintere vertikale Pfosten als Rohr mit einem im Wesentlichen rechteckigen Querschnitt ausgebildet sein.

Vorteilhaft ist, wenn bei der erfindungsgemäßen Überrollschutzvorrichtung der linke und der rechte hintere vertikale Pfosten eine ebene Oberfläche aufweisen, die im wesentlichen senkrecht gegenüber einer linken und rechten hinteren Fensterverkleidung ausgerichtet ist.

Bei der erfindungsgemäßen Überrollschutzvorrichtung kann ein freitragender Rahmen am linken und rechten hinteren vertikalen Pfosten befestigt sein und der freitragende Rahmen sich rückwärts hiervon erstrecken.

Es können auch zwei Mittelpfosten vom freitragenden Rahmen zum Boden verlaufen, die die hintere Fensterverkleidung aufnehmen.

Weitere die Erfindung verbessernde Maßnahmen sind Bestandteil der Unteransprüche oder werden nachstehend gemeinsam mit der Beschreibung eines bevorzugten Ausführungsbeispiels der Erfindung anhand der Figuren näher dargestellt. Es zeigt:
- Fig. 1: eine Seitenansicht eines Tieflöffelbaggers als Arbeitsfahrzeug,

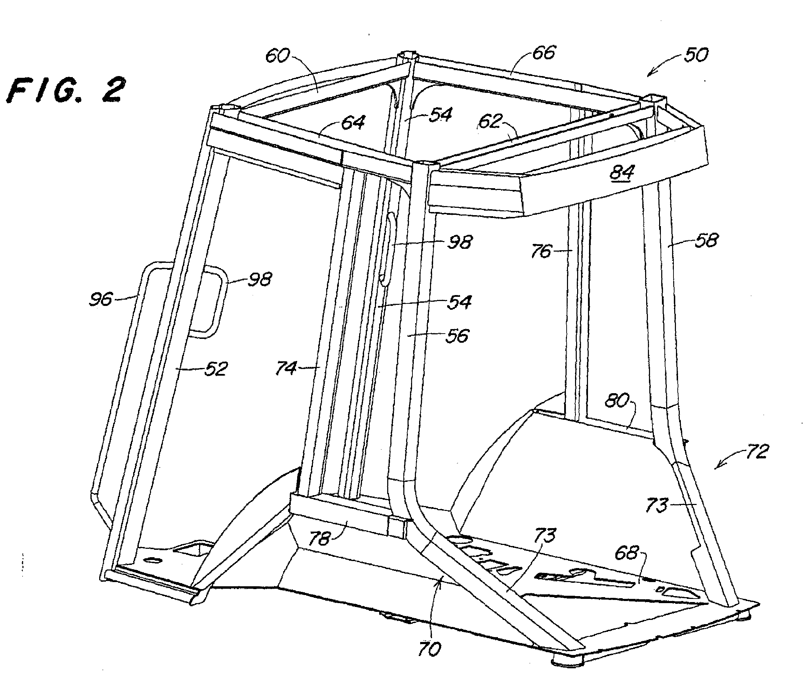

- Fig. 2: eine perspektivische Ansicht einer Überrollschutzvorrichtung gemäß der vorliegenden Erfindung,

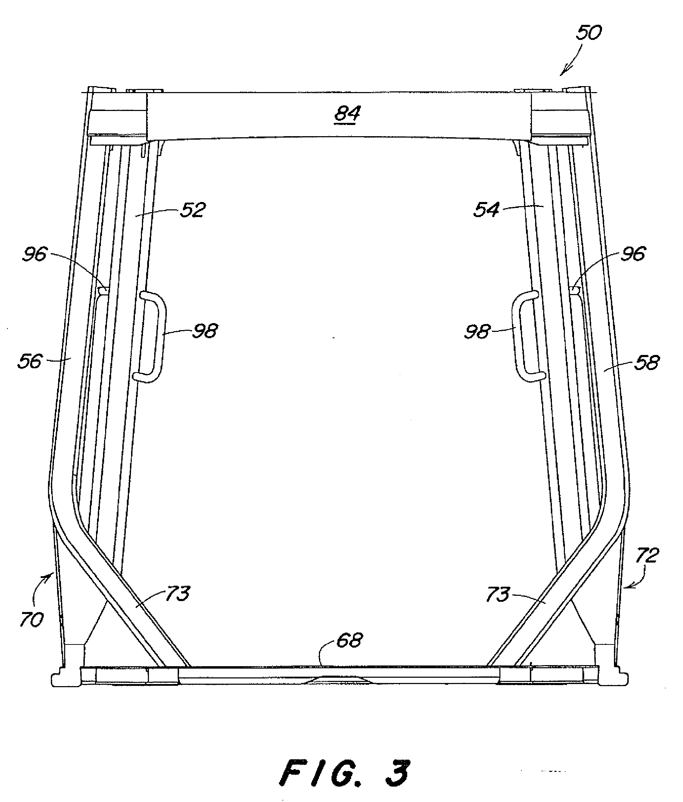

- Fig. 3: eine Hinteransicht der Überrollschutzvorrichtung gemäß der vorliegenden Erfindung,

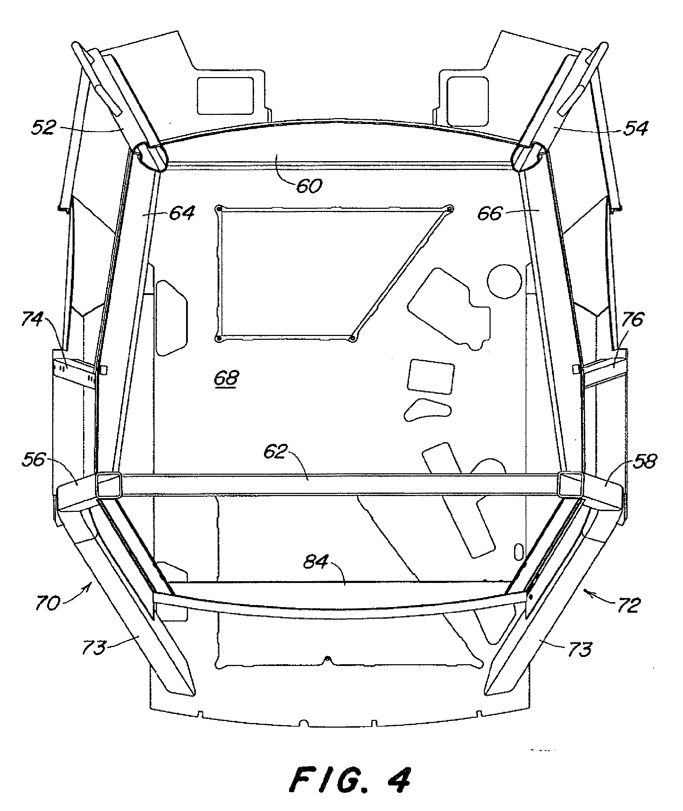

- Fig. 4: eine Draufsicht auf die Überrollschutzvorrichtung gemäß der vorliegenden Erfindung,

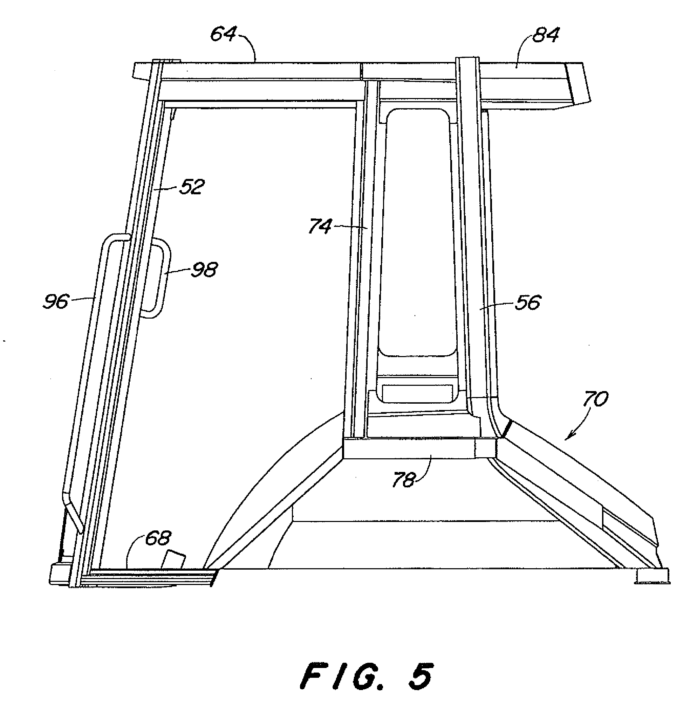

- Fig. 5: eine Seitenansicht der Überrollschutzvorrichtung gemäß der vorliegenden Erfindung, und
- Fig. 6: eine teilweise Querschnittsansicht eines vorderen vertikalen Pfostens der Überrollschutzvorrichtung.

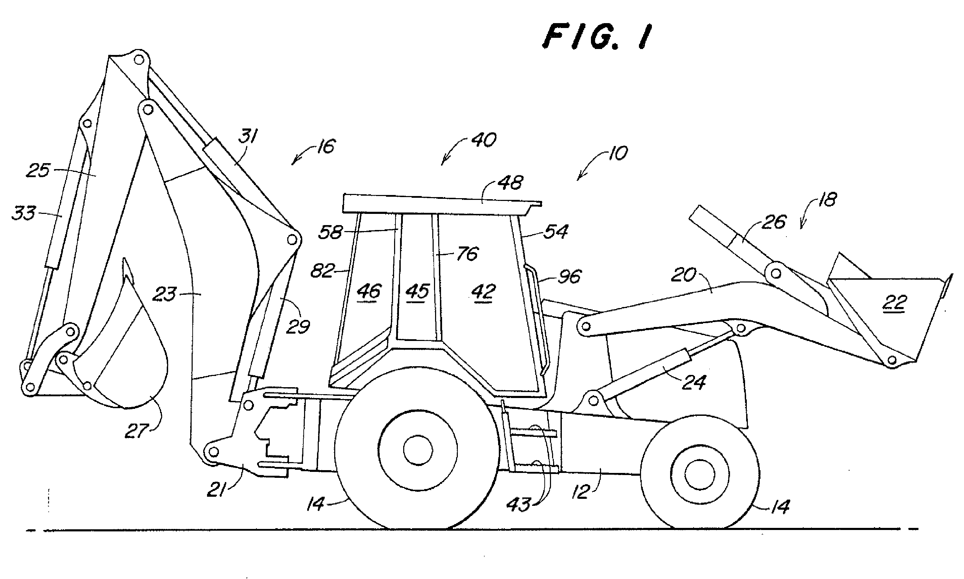

Das Arbeitsfahrzeug 10 gemäß Fig. 1 ist als Tieflöffelbagger ausgestaltet. Das Arbeitsfahrzeug 10 ist mit einem Rahmen 11 sowie Bodenkontaktmitteln 14 ausgestattet, welche hier Räder umfassen, die den Rahmen 12 stützen und antreiben. Obwohl die Bodenkontaktmittel 14 des gezeigten Ausführungsbeispiels als Räder ausgebildet sind, kann die vorliegende Erfindung ebenfalls bei Raupenfahrzeugen angewendet werden, die aus Stahl oder Gummi bestehende Gleisbahnen besitzen. Ferner ist auch eine Anwendung bei schienengebundenen Fahrzeugen oder dergleichen denkbar. Der Rahmen 12 ist mit zwei Arbeitsausrüstungen versehen, nämlich einer hinten befestigten Baggereinrichtung 16 und einer vorn befestigten Ladeeinrichtung 18.

Die Ladeeinrichtung 18 ist vorne am Rahmen 12 befestigt und umfasst Hubarme 20 und eine Schaufel 22. Die Hubarme 20 sind mit Hubarm-Hydraulikzylindern 24 ausgerüstet, um die Hubarme 20 gegenüber dem Rahmen 12 zu heben. Die Schaufel 22 ist schwenkbar am Ende des Hubarmes 20 befestigt. Die Schaufel 22 ist mit einem Schaufelkipp-Hydraulikzylinder 26 zum Kippen der Schaufel 22 bezüglich der Hubarme 20 ausgestattet.

Die Baggereinrichtung 16 ist hinten am Rahmen 12 befestigt und umfasst einen Schwenkrahmen 21, einen Ausleger 23, einen Stiel 25 sowie eine Schaufel 27. Der Schwenkrahmen 21 ist schwenkbar am Rahmen 12 über eine vertikale Schwenkachse montiert. Diverse Schwenkrahmen-Hydraulikzylinder - welche hier nicht weiter dargestellt sind - schwenken den Schwenkrahmen 21 relativ zum Rahmen 12. Der Ausleger 23 ist drehbar am Schwenkrahmen 21 über ein horizontales Lager gekoppelt und ist über einen Ausleger-Hydraulikzylinder 29 heb- und senkbar. Der Stiel 25 ist am Ausleger 23 über eine horizontale Achse drehbar befestigt und ist relativ zum Ausleger 23 durch einen Stiel-Hydraulikzylinder 31 schwenkbar. Die Schaufel 27 ist relativ zum Stiel 25 durch einen Schaufel-Hydraulikzylinder 33 kippbar.

Die Arbeitsausrüstung und das Fahrzeug selbst sind von einem Führerhaus 40 aus steuerbar. Der Bediener erlangt Zugang zum Führerhaus 40 über eine gläserne Seitentür 42 mittels der Stufen 43. Vom Innenraum des Führerhauses 40 aus hat der Bediener eine Sicht nach draußen durch eine vordere Windschutzscheibe 44, Seitenfenster 45 und durch eine hintere Fensterverkleidung 46. Das Führerhaus 40 ist weiterhin mit einem Dach 48 ausgestattet.

Das Führerhaus 40 ist ausgerüstet mit einer aus vier Pfosten bestehenden Überrollschutzvorrichtung 50. Die Überrollschutzvorrichtung 50 umfasst einen linken und einen rechten vorderen vertikalen Pfosten 52 und 54, einen linken und einen rechten hinteren vertikalen Pfosten 56 und 58, seitlich verlaufende vordere und hintere Teile 60 und 62 und links und rechts längs verlaufende Teile 64 und 66. Die vorderen und hinteren vertikalen Pfosten 52, 54, 56, 58 sind am Boden 68 befestigt, der einen Teil des Rahmens 12 des Fahrzeuges 10 bildet.

Der linke und der rechte hintere vertikale Pfosten 56 und 58 sind aus einem Rohr mit rechteckförmigem Querschnitt gebildet.

Beide hinteren vertikalen Pfosten 56 und 58 weisen untere Bereiche 70, 72 auf. Die unteren Bereiche 70, 72 jedes vertikalen Pfostens 56 und 58 erstrecken sich ausgehend vom Boden 68 woran die Pfosten 56 und 58 befestigt sind aufwärts, vorwärts sowie nach außen. Bei der Formgebung der hinteren vertikalen Pfosten 56 und 58 wurden diese leicht verdreht, so dass die Pfosten 56 und 58 eine ebene Oberfläche 73 bilden, die senkrecht zu der hinteren Fensterverkleidung 46 ausgerichtet ist. Durch eine Anordnung der hinteren vertikalen Pfosten 56 und 58 in dieser Weise werden die Seitensichtverhältnisse des Bedieners während des Betriebs der Baggereinrichtung vergrößert. Zusätzlich wird die Fuß- und Kniefreiheit vergrößert, wenn der Bediener seinen Sitz von der vorderen Sichtposition in die hintere Sichtposition dreht.

Ein linker sowie ein rechter vertikaler Zwischenpfosten 74 und 76 ist jeweils zwischen den vorderen vertikalen Pfosten 52 und 54 und den hinteren vertikalen Pfosten 56 und 58 angeordnet. Die Windschutzscheibe 44 ist zwischen dem linken und dem rechten vorderen vertikalen Pfosten 52 und 54 unterhalb des vorderen seitlich verlaufenden Teils 60 platziert. Die Seitentüren 42 sind zwischen den linken und rechten vorderen vertikalen Pfosten 52 und 54 sowie dem linken bzw. rechten Zwischenpfosten 74 und 76 angeordnet, unterhalb des linken bzw. rechten längsverlaufenden Teils 64 und 66 und oberhalb des Bodens 68. Die Seitenfenster 45 sind zwischen den linken und rechten Zwischenpfosten 74 und 76 sowie den linken bzw. rechten hinteren vertikalen Pfosten 56 und 58 angeordnet, unterhalb des linken bzw. rechten längsverlaufenden Teils 64 und 66 und oberhalb linker bzw. rechter Rahmenteile 78 und 80. Die längsverlaufenden Rahmenteile 78 und 80 erstrecken sich zwischen dem linken und rechten vertikalen Zwischenpfosten 74 und 76 und dem linken bzw. rechten hinteren vertikalen Pfosten 70 und 72. Drei hintere Fensterverkleidungen 46 schließen den hinteren Teil des Führerhauses 40 ein. Zwei der hinteren Fensterverkleidungen 46 erstrecken sich rückwärts und nach innen, ausgehend vom linken und rechten hinteren vertikalen Pfosten 56 und 58 zu einem linken und einem rechten vertikal verlaufenden Mittelpfosten 82 (bzw. Stoßkanten). Diese beiden Fensterverkleidungen 46 sind unterhalb des freitragenden Rahmens 84 und dem unteren Bereich 70, 72 des linken und rechten hinteren vertikalen Pfostens 56 und 58 angeordnet. Der freitragende Rahmen 84 ist am linken und rechten hinteren vertikalen Pfosten 56 und 58 befestigt und erstreckt sich rückwärts hiervon. Eine zentrale hintere Fensterverkleidung 46 ist zwischen der linken und der rechten Verbindungssprosse 82, unterhalb des freitragenden Rahmens 84 und oberhalb des Bodens 68 angeordnet.

Der linke und rechte vordere vertikale Pfosten 52 und 54 besitzen einen pfeilspitzenförmigen Querschnitt mit einem Hauptflügel 86, einem Sekundärflügel 88 und Verbindungsabschnitten 90 zum verbinden der beiden Flügel 86 und 88. Die Flügel 86 und 88 und die Verbindungsabschnitte 90 bilden einen Kanal 92 bzw. eine Auskehlung zur Aufnahme einer Windschutzscheibe und einen Kanal 94 bzw. eine Auskehlung für eine Tür 42. Der Windschutzscheibenkanal 92 nimmt eine Seitenkante der Windschutzscheibe 44 auf. Der Türkanal 94 nimmt eine Seitenkante der Seitentür 42 auf. Der pfeilspitzenförmige Querschnitt der vorderen vertikalen Pfosten 52 und 54 bildet eine verlängerte Mittelachse. Diese verlängerte Mittelachse korrespondiert im wesentlichen mit der Sichtlinie des Bedieners beim Fahren des Arbeitsfahrzeugs 10. Die verlängerte Mittelachse verläuft durch beide Flügel 86 und 88 und zwischen den Verbindungsabschnitten 90. Der Sekundärflügel 88 ist mit einem äußeren Griff 96 ausgestattet, der außerhalb des geschlossenen Raums angeordnet ist, welcher durch das Führerhaus 40 gebildet ist.

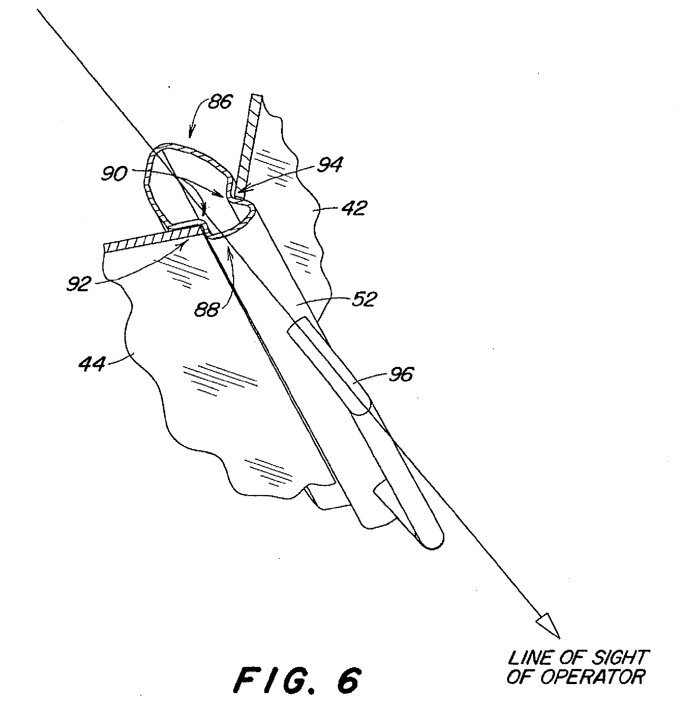

Wie in der Fig. 6 gezeigt, liegt der äußere Griff 96 im wesentlichen auf der verlängerten Mittelachse und liegt damit im Sichtschatten des linken vorderen vertikalen Pfostens 52, wenn der Bediener nach vorn schaut. In ähnlicher Weise ist der Hauptflügel 86 mit einem inneren Griff 98 ausgestattet, der sich in den durch das Führerhaus 40 gebildeten abgeschlossenen Innenraum hineinerstreckt. Die inneren Griffe 98 liegen ebenfalls auf verlängerten Mittelachsen und sind im Schatten der vorderen vertikalen Pfosten 52 und 54 angeordnet, an welchen sie befestigt sind. Durch die Anwendung des pfeilförmigen Querschnitts der vorderen vertikalen Pfosten 52 und 54 vergrößert sich der Sichtbereich des Bedieners und bildet gleichzeitig auch stabile Pfosten, der die Seitenkanten der Windschutzscheibe 44 und der Seitentüren 42 aufnehmen.

Die vorliegende Erfindung wurde anhand eines Arbeitsfahrzeuges 10 mit einem Führerhaus 40 dargestellt. Die Erfindung kann jedoch auch bei einem offenen Bedienungsstand angewendet werden. Demzufolge ist die vorliegende Erfindung nicht beschränkt auf das vorstehend beschriebene Ausführungsbeispiel sondern ist ausschließlich beschränkt auf den Schutzbereich der nachfolgenden Ansprüche.

## Patentansprüche

1. Überrollschutzvorrichtung für ein Arbeitsfahrzeug (10) mit einem Boden (68), mindestens einem linken sowie einem rechten vorderen vertikalen Pfosten (52, 54), die am Boden (68) des Arbeitsfahrzeuges (10) angebracht sind, sowie einem linken und einem rechten hinteren vertikalen Pfosten (56, 58), die ebenfalls am Boden (68) des Arbeitsfahrzeuges (10) angebracht sind, **dadurch gekennzeichnet, dass** der linke und rechte vertikale Pfosten (52, 54) einen pfeilspitzenförmigen Querschnitt aufweist mit einem Hauptflügel (86), einem Sekundärflügel (88) und einem dazwischenliegenden Verbindungsabschnitt (90).

2. Überrollschutzvorrichtung gemäß Anspruch 1, **dadurch gekennzeichnet, dass** der Hauptflügel (86), der Sekundärflügel (88) und der Verbindungsabschnitt (90) einen Kanal (92) für eine Windschutzscheibe (44) und/oder einen Kanal (94) für eine Seitentür (42) bilden, wobei zwischen den Kanälen (92, 94) eine verlängerte Achse verläuft.

3. Überrollschutzvorrichtung gemäß Anspruch 1 oder 2, **dadurch gekennzeichnet, dass** der pfeilförmige Querschnitt eine verlängerte Achse definiert, die durch den Hauptflügel (86), den Verbindungsabschnitt (90) und den Sekundärflügel (88) verläuft.

4. Überrollschutzvorrichtung gemäß Anspruch 2 oder 3, **dadurch gekennzeichnet, dass** die Überrollschutzvorrichtung (50) einen abgeschlossenen Innenraum definiert, in welchem ein Bediener Platz nimmt, wobei sich die verlängerten Achsen der pfeilförmigen Querschnitte der linken und rechten vertikalen Pfosten (52, 54) im abgeschlossenen Innenraum schneiden.

5. Überrollschutzvorrichtung gemäß Anspruch 2, **dadurch gekennzeichnet, dass** der Kanal (92) der Windschutzscheibe (44) eine Kante der vorderen Windschutzscheibe (44) aufnimmt und der Kanal (94) für die Seitentür (42) eine Kante der Seitentür (42) aufnimmt.

6. Überrollschutzvorrichtung nach einem der vorstehenden Ansprüche, **dadurch gekennzeichnet, dass** der linke und/oder der rechte vordere vertikale Pfosten (52, 54) mit einem äußeren Griff (96) versehen sind, der außerhalb des abgeschlossenen Innenraums angeordnet und in Richtung der verlängerten Achse ausgerichtet ist.

7. Überrollschutzvorrichtung nach einem der vorstehenden Ansprüche, **dadurch gekennzeichnet, dass** der linke und/oder der rechte vordere vertikale Pfosten (52, 54) mit einem inneren Griff (98) ausgestattet sind, der innerhalb des abgeschlossenen Innenraums angeordnet und in Richtung der verlängerten Achse ausgerichtet ist.

8. Überrollschutzvorrichtung nach einem der vorstehenden Ansprüche, **dadurch gekennzeichnet, dass** die Überrollschutzvorrichtung (50) weiterhin ein vorderes seitlich verlaufendes Teil (60) umfasst, das sich zwischen dem linken und dem rechten vertikalen Pfosten (52, 54) erstreckt, und/oder dass sich ein hinteres seitlich verlaufendes Teil (62) zwischen dem linken und dem rechten hinteren vertikalen Pfosten (56, 58) erstreckt, und/oder dass ein linkes längs verlaufendes Teil (64) sich zwischen dem linken vorderen vertikalen Pfosten (52) und dem linken hinteren vertikalen Pfosten (56) erstreckt, und/oder dass ein rechtes längs verlaufendes Teil (66) sich zwischen dem rechten vorderen vertikalen Pfosten (54) und dem rechten hinteren vertikalen Pfosten (58) erstreckt.

9. Überrollschutzvorrichtung nach einem der vorstehenden Ansprüche, **dadurch gekennzeichnet, dass** der linke und der rechte hintere vertikale Pfosten (56, 58) je einen unteren Bereich (70, 72) aufweist, der sich jeweils vom Boden (68) des Arbeitsfahrzeuges (10), an dem der linke und rechte vertikale Pfosten (56, 58) befestigt ist, aufwärts, vorwärts und seitlich nach außen erstreckt.

10. Überrollschutzvorrichtung nach einem der vorstehenden Ansprüche, **dadurch gekennzeichnet, dass** der linke und der rechte hintere vertikale Pfosten (56, 58) als Rohr mit einem im wesentlichen rechteckigen Querschnitt ausgebildet ist.

11. Überrollschutzvorrichtung nach einem der vorstehenden Ansprüche, **dadurch gekennzeichnet, dass** der linke und der rechte hintere vertikale Pfosten (56, 58) eine ebene Oberfläche (73) aufweist, die im wesentlichen senkrecht gegenüber einer linken und rechten hinteren Fensterverkleidung (46) ausgerichtet ist.

12. Überrollschutzvorrichtung nach einem der vorstehenden Ansprüche, **dadurch gekennzeichnet, dass** ein freitragender Rahmen (84) am linken und rechten hinteren vertikalen Pfosten (56, 58) befestigt ist und der freitragende Rahmen (84) sich rückwärts hiervon erstreckt.

13. Überrollschutzvorrichtung nach Anspruch 12, **dadurch gekennzeichnet, dass** zwei Mittelpfosten (82) vom freitragenden Rahmen (84) zum Boden (68) verlaufen, die die hintere Fensterverkleidung (46) aufnehmen.
